# EUROPÄISCHE PATENTSCHRIFT

(11) **EP 3 947 973 B1**
(45) Veröffentlichungstag und Bekanntmachung des Hinweises auf die Patenterteilung: **03.05.2023**
(21) Anmeldenummer: 20714486.6
(22) Anmeldetag: 10.03.2020
(51) Int. Cl.: F04C 25/02, F04C 27/02, F04C 29/02, F04C 28/28

(54) **SCHMIERMITTELAUFNAHME**
LUBRICANT RECEPTACLE
RÉCIPIENT DE LUBRIFIANT

(30) Priorität: 01.04.2019 DE 202019101841 U
(43) Veröffentlichungstag der Anmeldung: 09.02.2022
(73) Patentinhaber: Leybold France SAS, 26500 Bourg-Lès-Valence (FR)
(72) Erfinder: FOURNIER, Patrick, 26100 Romans-sur-Isère (FR)
(74) Vertreter: dompatent von Kreisler Selting Werner - Partnerschaft von Patent- und Rechtsanwälten mbB
(86) Internationale Anmeldenummer: PCT/EP2020/056356
(87) Internationale Veröffentlichungsnummer: WO 2020/200665

(56) Entgegenhaltungen:
- CN-A- 107 806 414
- CN-A- 107 842 502
- DE-A1- 3 501 852
- US-A- 2 049 211
- US-A- 5 209 653

## Beschreibung

Die Erfindung betrifft eine Schmiermittelaufnahme für eine Vakuumpumpe sowie eine Vakuumpumpe mit Schmiermittelaufnahme. Bei der Vakuumpumpe handelt es sich insbesondere um eine schmiermittelgedichtete Vakuumpumpe, besonders bevorzugt um eine schmiermittelgedichtete Drehschieberpumpe. Bei der Schmiermittelaufnahme handelt es sich vorzugsweise um eine Schmiermittelaufnahme für eine derartige Vakuumpumpe.

Vakuumpumpen die mit Schmiermittel betrieben werden, wie beispielsweise Drehschieberpumpen, weisen generell integrierte Schmiermittelaufnahmen auf. Derartige Schmiermittelaufnahmen dienen beispielsweise zur Aufbewahrung von Schmiermittel, zur Abscheidung von Schmiermittel aus dem geförderten Fluidstrom und zur Schmiermittelfilterung, etc. Bei dem am häufigsten verwendeten Schmiermittel handelt es sich um Öl. Beispielsweise zum Betrieb von geläufigen Drehschieberpumpen weisen diese einen Öltank, einen Ölabscheider, wie beispielsweise einen Luftölfilter, Ölpartikelfilter und/oder Ölkühlungssystem auf.

Übliche Wartungsarbeiten bei schmiermittelgedichteten Vakuumpumpen umfassen insbesondere einen Schmiermittelwechsel, wie beispielsweise einen Ölwechsel, und/oder den Austausch von Verschleißteilen, wie beispielsweise den Filtern.

Bei derartigen Wartungsschritten kommt es zu zahlreichen Problemen. Beispielsweise beim Ablassen des Öls im Rahmen eines Ölwechsels kann es vorkommen, dass Personen in Kontakt mit dem Öl kommen. Hierdurch kann es zu gesundheitlichen Problemen, beispielsweise aufgrund der (heißen) Temperatur des Öls kommen. Darüber hinaus kommt es gelegentlich zu unbeabsichtigten Ölverlusten, sodass das Öl in die Umwelt austritt und derart zu Umweltverschmutzungen führt. Ebenso treten Probleme beim Ein- bzw. Nachfüllen von Frischöl auf. So kann es bei einer unsachgemäßen Befüllung zu einem überlaufen und/oder zu Ölverlusten kommen, wodurch ebenfalls die Umwelt negativ beeinflusst wird und/oder Kosten entstehen. Sofern nicht ausreichend oder kein Frischöl eingefüllt wird, bzw. vorhanden ist, kommt es zu einem versagen und/oder Verschleiß der Vakuumpumpe. Ebenfalls besteht die Möglichkeit, dass Auswechselteile, wie beispielsweise Filter, nicht oder nicht sachgemäß eingesetzt werden und es demnach Betriebsfehler auftreten.

Eine Flügelzellen-Vakuumpumpe mit einer Schmiermittelaufnahme, die die Merkmale des Oberbegriffs des Anspruchs 1 aufweist, ist aus DE 3501852 bekannt.

Aufgabe der Erfindung ist es, eine Schmiermittelaufnahme sowie eine Vakuumpumpe mit einer Schmiermittelaufnahme zu schaffen, wobei die Wartung optimiert ist.

Die Lösung der Aufgabe erfolgt erfindungsgemäß durch eine Schmiermittelaufnahme nach Anspruch 1 sowie ein Vakuumpumpensystem gemäß Anspruch 11.

Bei der erfindungsgemäßen Schmiermittelaufnahme für eine Vakuumpumpe handelt es sich insbesondere um eine Schmiermittelaufnahme für schmiermittelgedichtete Vakuumpumpen. Besonders bevorzugt ist es, dass es sich um eine Schmiermittelaufnahme für eine Drehschieberpumpe handelt. Vorzugsweise handelt es ich um eine externe Schmiermittelaufnahme, also eine Schmiermittelaufnahme, die extern der Vakuumpumpe ist. Mit der externen Anordnung ist hierbei insbesondere gemeint, dass die Schmiermittelaufnahme nicht fest, vorzugsweise einstückig, mit der Vakuumpumpe ausgebildet ist und/oder, dass die Schmiermittelaufnahme nicht innerhalb des Gehäuses der Vakuumpumpe angeordnet ist. Bevorzugt handelt es sich bei der Schmiermittelaufnahme um eine Ölaufnahme, da das am häufigsten verwendete Schmiermittel für Vakuumpumpen Öl darstellt. Folglich handelt es sich bei dem Schmiermittel sowie bei den Schmiermittelkomponenten insbesondere um Öl bzw. Ölkomponenten. Die Schmiermittelaufnahme weist ein Schmiermittelreservoir auf. Dieses Schmiermittelreservoir wiederum weist einen Gaseinlass, einen Gasauslass, einen Schmiermittlauslass sowie vorzugsweise einen Schmiermitteleinlass auf. Bei diesen sowie den im Folgenden beschriebenen Ein- und/oder Auslässen handelt es sich vorzugsweise um Öffnungen, die ein Ein- bzw. Auslassen von den jeweiligen Fluiden ermöglichen. Bevorzugt ist es hierbei, dass die jeweiligen Ein- und/oder Auslässe Ventile, wie insbesondere Rückschlagventile und/oder schaltbare Ventile aufweisen. Rückschlagventile bezeichnen hierbei Ventile bzw. Armaturen, die einen Fluidstrom lediglich in eine Richtung zulassen. Bevorzugt ist es somit, dass Einlässe ein Rückschlagventil aufweisen, das derart ausgestaltet ist, dass dieses lediglich einen Fluidstrom in das jeweilige System bzw. die jeweilige Komponente ermöglichen und in entgegengesetzter Richtung für eine Absperrung sorgen. Rückschlagventile im Rahmen von Auslässen sind dementsprechend entgegengesetzt ausgebildet bzw. angeordnet. Gaseinlässe und/oder Gasauslässe bezeichnen hierbei Einlässe bzw. Auslässe, die nicht nur Gas fördern. Bei dem Gas kann es sich auch um ein Fluid, beispielsweise ein Dampf- und/oder Schmiermittelgemisch, etc. handeln. Gas meint hier insbesondere das von einer Vakuumpumpe verdichtete Medium. Weitergehend weist die Schmiermittelaufnahme einen Schmiermittelabscheider auf, der einen Gaseinlass, einen Gasauslass sowie einen Schmiermittelauslass aufweist. Bei diesen sowie den übrigen Ein- und/oder Auslässen kann es sich auch um eine Art Übergang vom einen zu einem anderen Bereich handeln. Grenzen somit in einer bevorzugten Ausführung Schmiermittelreservoir und Schmiermittelabscheider unmittelbar aneinander, sodass keine räumliche Trennung, sondern lediglich eine virtuelle bzw. funktionelle Trennung möglich ist, so ist es bevorzugt, dass dieser Trennungsbereich Ein- und/oder Auslässen entspricht. Schmiermittelabscheider bezeichnet insbesondere eine Vorrichtung, die derart ausgelegt ist, dass diese eine Schmiermittelabtrennung aus dem geförderten Gasstrom ermöglicht. Hierzu können im Rahmen des Schmiermittelabscheiders beispielsweise Filter und/oder Vorrichtungen zur Reduzierung der Fördergeschwindigkeit des Gasstroms und/oder Vorrichtungen zur Schwerkraftabscheidung eingesetzt werden. Die Schmiermittelaufnahme weist darüber hinaus einen Auspuff auf, der insbesondere gasführend mit dem Gasauslass des Schmiermittelabscheiders verbunden ist. Der Auspuff sorgt vorzugsweise für eine Abgabe des geförderten Gasstroms an die Umgebung und/oder eine nachgeschaltete Vorrichtung zur Aufnahme des geförderten Gasstroms. Zwischen dem Gasauslass des Schmiermittelreservoirs und dem Gaseinlass des Schmiermittelabscheiders ist eine erste Gasverbindung, also eine Verbindung zur Förderung des Gasstroms, vorgesehen. Zwischen dem Gaseinlass des Schmiermittelreservoirs und der Vakuumpumpe ist eine zweite Gasverbindung vorgesehen. Der Schmiermittelauslass des Schmiermittelreservoirs ist mit der Vakuumpumpe über eine erste Schmiermittelverbindung verbunden. Ferner ist eine weitere (zweite) Schmiermittelverbindung zur Verbindung des Schmiermittelauslasses des Schmiermittelabscheiders und dem Schmiermitteleinlass des Schmiermittelreservoirs vorgesehen. Alternativ oder zusätzlich zu der weiteren Schmiermittelverbindung ist eine zusätzliche (dritte) Schmiermittelverbindung zur Verbindung des Schmiermittelauslasses des Schmiermittelabscheiders mit der Vakuumpumpe vorgesehen. Bei Verbindungen kann es sich auch um eine Art Übergang vom einen zu einem anderen Bereich handeln. Grenzen somit bspw. in bevorzugten Ausführungen Schmiermittelreservoir und Schmiermittelabscheider, und/oder Schmiermittelreservoir und Vakuumpumpe, und/oder Schmiermittelabscheider und Auspuff, unmittelbar aneinander, sodass keine räumliche Trennung, sondern lediglich eine virtuelle bzw. funktionelle Trennung möglich ist, so ist es bevorzugt, dass dieser Trennungsbereich einer Verbindung entspricht. Zumindest eine der Gasverbindungen und zumindest eine der Schmiermittelverbindung ist hierbei selektiv koppelbar ausgeführt. Selektiv koppelbar meint hierbei insbesondere eine anschließbare Verbindung, sodass beispielsweise manuell eine jeweilige Verbindung, insbesondere temporär, hergestellt werden kann. Bei einer Gasverbindung oder einer Schmiermittelverbindung handelt es sich insbesondere um einen Schlauch und/oder ein Rohr zur Herstellung einer gas- bzw. schmiermittelführenden Verbindung. Selektiv koppelbar kann hierbei insbesondere derart ausgestaltet sein, dass eine einseitige oder beidseitige Koppelbarkeit besteht. Soll demnach eine Verbindung zwischen einem Einlass und einem Auslass hergestellt werden ist es möglich, dass, beispielsweise Mittels Schlauch, lediglich der Einlass oder der Auslass koppelbar ausgestaltet ist und hieran beispielsweise der Schlauch angeschlossen werden kann. An dem nicht koppelbaren Einlass oder Auslass kann dann beispielsweise der Schlauch fest befestigt sein.

Bevorzugt ist es, dass die Schmiermittelaufnahme eine der folgenden Konfigurationen aufweist. Eine erste Konfiguration besteht darin, dass die erste Gasverbindung, die erste Schmiermittelverbindung sowie vorzugsweise die zusätzliche (dritte) Schmiermittelverbindung selektiv koppelbar ausgestaltet ist. Im Rahmen einer zweiten Konfiguration ist die erste Gasverbindung, die zweite Gasverbindung, die erste Schmiermittelverbindung sowie vorzugsweise die weitere (zweite) und/oder die zusätzliche (dritte) Schmiermittelverbindung selektiv koppelbar. Eine dritte Konfiguration sieht vor, dass die zweite Gasverbindung sowie vorzugsweise die weitere (zweite) und/oder die zusätzliche (dritte) Schmiermittelverbindung selektiv koppelbar ausgeführt ist. Eine vierte Konfiguration der Schmiermittelaufnahme sieht vor, dass die erste Gasverbindung, die zweite Gasverbindung, die erste Schmiermittelverbindung sowie vorzugsweise die zusätzliche (dritte) Schmiermittelverbindung selektiv koppelbar ist. Im Rahmen aller Konfigurationen ist es bevorzugt, dass die übrigen, nicht koppelbaren, Gasverbindungen und/oder Schmiermittelverbindungen fest verbunden ausgeführt sind. Besonders bevorzugt ist es hierbei, dass die feste Verbindung integral, auch als einstückig bezeichnet, ausgeführt ist. Ist demnach ein Einlass mit einem Auslass fest verbunden, so kann diese Verbindung, insbesondere zerstörungsfrei, und/oder auf einfache händische Weise, nicht getrennt bzw. (erneut) verbunden werden.

Im bevorzugter Ausführungsform weist die Schmiermittelaufnahme ein vorzugsweise einziges Gehäuse auf, welches das Schmiermittelreservoir sowie den Schmiermittelabscheider aufnimmt. Alternativ weist die Schmiermittelaufnahme ein Gehäuse, welches das Schmiermittelreservoir aufnimmt, sowie ein Gehäuse, welches den Schmiermittelaufnehmer aufnimmt, auf. Alternativ ist es auch möglich, dass die Schmiermittelaufnahme lediglich ein Gehäuse aufweist, welches das Schmiermittelreservoir oder den Schmiermittelabscheider aufnimmt. Bei den vorstehend beschriebenen Gehäusen handelt es sich insbesondere um Gehäuse, die nicht dem Gehäuse der Vakuumpumpe entsprechen. Gemäß der vorstehenden Definition zu den Gehäusen sind insbesondere die folgenden Gehäusekonfigurationen bevorzugt: ein einziges Gehäuse für Schmiermittelreservoir und Schmiermittelabscheider; ein Gehäuse für den Schmiermittelabscheider sowie ein Gehäuse für das Schmiermittelreservoir; ein Gehäuse für das Schmiermittelreservoir; oder ein Gehäuse für den Schmiermittelabscheider. Die Ein- und/oder Auslässe der jeweiligen Komponenten sind hierbei insbesondere an dem jeweiligen Gehäuse ausgebildet. Demnach ist es bevorzugt, dass der Ein- und/oder Auslass als Bohrungen bzw. Öffnungen des Gehäuses vorgesehen ist. Ist somit das Schmiermittelreservoir beispielsweise in einem Schmiermittelreservoirgehäuse vorgesehen, so weist das Schmiermittelreservoirgehäuse eine Öffnung für den Gaseinlass, eine Öffnung für den Gasauslass, eine Öffnung für den Schmiermittelauslass und/oder vorzugsweise eine Öffnung für den Schmiermitteleinlass auf.

Es ist bevorzugt, dass die selektiv koppelbaren Gasverbindungen und/oder die selektiv koppelbaren Schmiermittelverbindungen einen, insbesondere einrastenden, Steckanschluss aufweisen. Ist die jeweilige Verbindung beispielsweise über ein Rohr gegeben, so kann das Rohr in den jeweiligen Ein- bzw. Auslass eingesteckt werden und vorzugsweise einrasten, sodass eine Verbindung hergestellt ist. Vorzugsweise weist der Steckanschluss einen Stutzen oder einen Nippel oder eine Muffe, insbesondere Steckmuffe, auf.

Bevorzugt ist es, dass die selektiv koppelbaren Gasverbindungen und/oder die selektiv koppelbaren Schmiermittelverbindungen selbstschließend, vorzugsweise bei entkoppeln der Verbindung, sind. Hierzu ist es bevorzugt, dass die Verbindungen und/oder Ein- bzw. Auslässe Rückschlagventile aufweisen. Wird beispielsweise die Schmiermittelverbindung des Schmiermittelreservoirs zur Vakuumpumpe entkoppelt, so kann aufgrund des selbst Schließens kein Schmiermittel aus der Vakuumpumpe und/oder dem Schmiermittelreservoir und/oder der Schmiermittelverbindung austreten.

Das Schmiermittelreservoir weist insbesondere eine erste Kammer, die vorzugsweise mit dem Schmiermitteleinlass des Schmiermittelreservoirs und/oder dem Gasauslass des Schmiermittelreservoirs verbunden ist. Alternativ oder zusätzlich zu der ersten Kammer weist das Schmiermittelreservoir ein Schmiermittelfiltersystem auf, welches insbesondere mit dem Schmiermittelauslass des Schmiermittelreservoirs verbunden ist. Bei dem Schmiermittelfiltersystem handelt es sich insbesondere um einen Ölfilter. Alternativ oder zusätzlich zu der ersten Kammer und/oder dem Schmiermittelfiltersystem weist das Schmiermittelreservoir einen Schmiermitteltank auf, der insbesondere mit der ersten Kammer und/oder dem Schmiermittelfiltersystem verbunden ist. Alternativ oder zusätzlich zu der ersten Kammer und/oder dem Schmiermittelfiltersystem und/oder dem Schmiermitteltank weist das Schmiermittelreservoir einen Wärmetauscher auf, wobei der Wärmetauscher vorzugsweise zwischen Schmiermittelfiltersystem und Schmiermittelauslass angeordnet ist. Der Wärmetauscher ist insbesondere schmiermittelkühlend ausgestaltet. Demnach sorgt der Wärmetauscher insbesondere für eine Temperierung des Schmiermittels auf vorzugsweise optimale Betriebstemperatur. Bei der ersten Kammer handelt es sich bevorzugt um eine Hochdruckkammer.

Bevorzugt weist die erste Kammer einen Schmiermittelseparator auf. Bei dem Schmiermittelseparator handelt es sich insbesondere um einen Gravitationsschmiermittelseparator. Hierbei ist der Schmiermittelseparator insbesondere derart ausgestaltet, dass Schmiermittel aus dem von der Vakuumpumpe verdichteten Gasstrom aufgrund von Gravitation und/oder Verringerung der Gasstromfördergeschwindigkeit ausgeschieden wird. Hierbei werden vorzugsweise größere Tröpfchen aus dem Gasstrom separiert.

In bevorzugter Ausführungsform weist der Schmiermittelabscheider ein Schmiermittelsepariersystem auf, welches insbesondere mit dem Gaseinlass des Schmiermittelabscheiders verbunden ist. Alternativ oder zusätzlich zum Schmiermittelsepariersystem weist der Schmiermittelabscheider insbesondere einen Gasschmiermittelfilter auf, der insbesondere mit dem Schmiermittelsepariersystem und/oder dem Gasauslass des Schmiermittelabscheiders verbunden ist. Bei dem Gasschmiermittelfilter handelt es sich vorzugsweise um einen Filter, der aus dem von der Vakuumpumpe verdichteten Gasstromschmiermittel, insbesondere feine Schmiermitteltropfen, ausfiltert. Alternativ oder zusätzlich zum Schmiermittelsepariersystem und/oder Gasschmiermittelfilter weist der Schmiermittelabscheider insbesondere ein Schmiermittelrückgewinnungssystem auf, welches vorzugsweise mit dem Schmiermittelsepariersystem und/oder dem Gasschmiermittelfilter verbunden ist. Alternativ oder zusätzlich zum Schmiermittelsepariersystem und/oder Gasschmiermittelfilter und/oder Schmiermittelrückgewinnungssystem weist der Schmiermittelabscheider insbesondere eine zweite Kammer auf, wobei die zweite Kammer vorzugsweise zwischen Schmiermittelrückgewinnungssystem sowie Schmiermittelsepariersystem und/oder Gasschmiermittelfilter angeordnet ist. In der zweiten Kammer herrscht vorzugsweise der gleiche Druck, der in der Umgebung der Schmiermittelaufnahme und/oder in der Umgebung der Vakuumpumpe vorliegt. Insbesondere handelt es sich bei der zweiten Kammer um eine Umgebungsdruckkammer. Besonders bevorzugt ist es, dass in der zweiten Kammer eine weitere Schmiermittelseparation aus dem Gasstrom erfolgt. Möglich ist es, dass die erste und die zweite Kammer eine einzige Kammer ausbilden.

Das Schmiermittelsepariersystem weist vorzugsweise mindestens einen Schmiermittelseparator auf. Bei dem mindestens einen Schmiermittelseparator handelt es sich vorzugsweise um einen Gravitationsschmiermittelseparator oder einen Filter oder einen Impellerseparator. Bei mehreren Schmiermittelseparatoren ist eine Kombination der vorstehenden Vorrichtungen möglich. Im Rahmen des Gravitationsschmiermittelseparators erfolgt insbesondere eine Schmiermittelseparation aufgrund von Gravitation und/oder aufgrund der Verringerung der Fördergeschwindigkeit.

Es ist bevorzugt, dass das Schmiermittelrückgewinnungssystem einen Wärmetauscher und/oder einen Schmiermitteltank aufweist. Der Wärmetauscher sorgt insbesondere für eine Schmiermittelkühlung bzw. eine Temperierung des Schmiermittels, vorzugsweise auf optimale Betriebstemperatur.

Bei dem erfindungsgemäßen Vakuumpumpensystem handelt es sich insbesondere um ein schmiermittelgedichtetes Vakuumpumpensystem. Besonders bevorzugt handelt es sich um ein Drehschieberpumpensystem. Das Vakuumpumpensystem weist vorzugsweise eine erfindungsgemäße Schmiermittelaufnahme gemäß den vorstehenden Definitionen auf. Ferner weist das Vakuumpumpensystem eine Vakuumpumpe, insbesondere eine schmiermittelgeschmierte Vakuumpumpe, besonders bevorzugt eine Drehschieberpumpe, auf. Der Gasauslass der Vakuumpumpe ist über die zweite Gasverbindung mit dem Gaseinlass des Schmiermittelreservoirs verbunden. Der Schmiermitteleinlass der Vakuumpumpe ist über die erste Schmiermittelverbindung mit dem Schmiermittelauslass des Schmiermittelreservoirs verbunden. Ferner ist es bevorzugt, dass der Schmiermitteleinlass der Vakuumpumpe über die zusätzliche (dritte) Schmiermittelverbindung mit dem Schmiermittelauslass des Schmiermittelabscheiders verbunden ist.

In bevorzugter Ausführungsform ist der Gasauslass der Vakuumpumpe und/oder der Schmiermitteleinlass der Vakuumpumpe selbstschließend ausgebildet.

Die selbstschließende Ausbildung ist hierbei insbesondere derart ausgeführt, dass ein Selbstschließen, beispielsweise Mittels Selbstschlussventils und/oder Rückschlagventils erfolgt, sobald die entsprechende Verbindung zur Schmiermittelaufnahme entkoppelt ist.

Nachfolgend wird die Erfindung anhand bevorzugter Ausführungsformen unter Bezugnahme auf die anliegenden Zeichnungen näher erörtert.

Es zeigen:
- Figur 1a: eine schematische Darstellung einer Ausführungsform eines erfindungsgemäßen Vakuumpumpensystems mit einer Ausführungsform einer erfindungsgemäßen Schmiermittelaufnahme und einer Vakuumpumpe,
- Figuren 1b und 1c: schematische Darstellungen weiterer Ausführungsformen erfindungsgemäßer Vakuumpumpensysteme mit Ausführungsformen erfindungsgemäßer Schmiermittelaufnahmen und Vakuumpumpen,
- Figur 2: eine perspektivisch schematische Darstellung eines erfindungsgemäßen Vakuumpumpensystems in Anlehnung an die Ausführungsform des Vakuumpumpensystems aus Figur 1a,
- Figuren 3a und 3b: schematische Darstellungen weiterer Ausführungsformen erfindungsgemäßer Vakuumpumpensysteme mit Ausführungsformen erfindungsgemäßer Schmiermittelaufnahmen und Vakuumpumpen,
- Figur 4: eine perspektivisch schematische Darstellung einer Ausführungsform eines erfindungsgemäßen Vakuumpumpensystems in Anlehnung an die Ausführungsformen aus Figuren 3a und 3b, und
- Figuren 5a, 5b und 6: weitere Ausführungsformen erfindungsgemäßer Vakuumpumpensysteme mit Ausführungsformen erfindungsgemäßer Schmiermittelaufnahmen und Vakuumpumpen.

Ähnliche oder identische Bauteile bzw. Elemente werden in den Figuren mit gleichen Bezugszeichen, bzw. Variationen (bspw. 104 und 104', 104", etc.) davon, identifiziert. Insbesondere zur verbesserten Übersichtlichkeit werden, vorzugsweise bereits identifizierte Elemente nicht in allen Figuren mit Bezugszeichen versehen. Die in den Figuren gezeigten (technischen) Symbole sind lediglich zur exemplarischen Darstellung gewählt. Nicht beschriebene Merkmale, die Elemente derartiger Darstellungen allgemein aufweisen können, sind hier insbesondere nicht rein zu interpretieren.

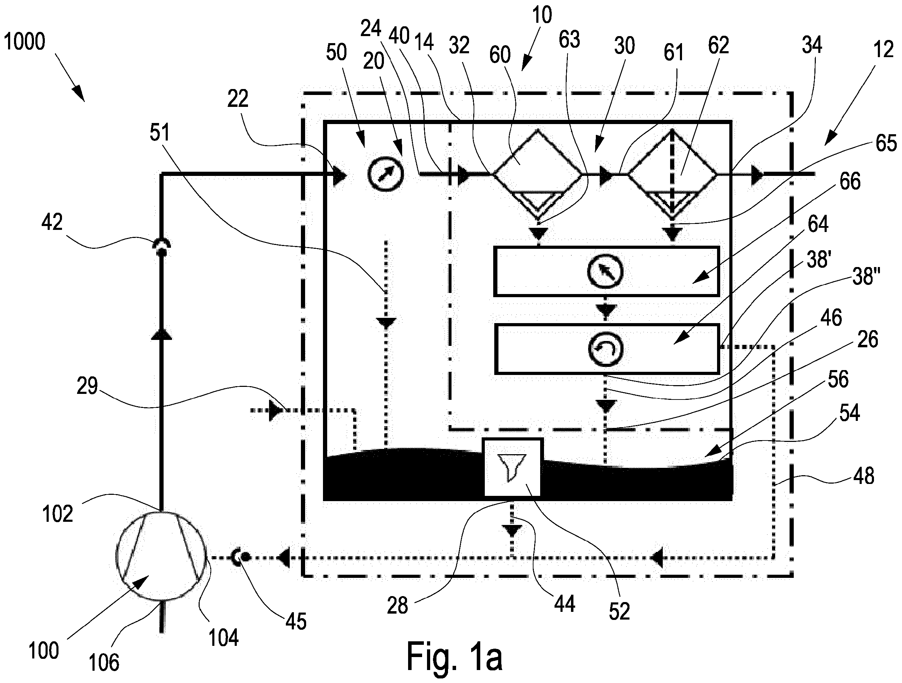

Figur 1a zeigt eine schematische Darstellung einer Ausführungsform eines erfindungsgemäßen Vakuumpumpensystems 1000 mit einer Ausführungsform einer erfindungsgemäßen Schmiermittelaufnahme 10 sowie einer Vakuumpumpe 100.

Die Vakuumpumpe 100 weist einen Gaseinlass 106 auf. Die Bezeichnung Gas ist in dieser und den anderen Darstellungen nicht streng ausschließlich als Gas anzusehen. Vielmehr meint diese Bezeichnung den von der Vakuumpumpe geförderten und verdichteten Fluidstrom. Somit kann es sich bei dem Gas beispielsweise auch um Dampf handeln. Derartige Gasverbindungen sind in den schematischen Darstellungen (Figuren 1a, 1b, 1c, 3a, 3b, 5a, 5b und 6) als Volllinien (bspw. 42) dargestellt, während Schmiermittelverbindungen bzw. - leitungen als Punktlinien (bspw. 48) dargestellt sind. Mittels des Gaseinlasses 106 kann die Vakuumpumpe 100 beispielsweise an einem (nicht dargestellten) zu evakuierenden Rezipient angeschlossen werden. Das verdichtete Gas tritt aus der Vakuumpumpe 100 aus dem Gasauslass 102 aus und wird über die zweite Gasverbindung 42 zur Schmiermittelaufnahme 10 geführt. Die zweite Gasverbindung 42 ist hierbei koppelbar ausgeführt, sodass eine gasführende Verbindung zwischen Vakuumpumpe 100 und Schmiermittelaufnahme 10 beispielsweise über einen Steckanschluss hergestellt werden kann.

Dargestellt weist die Schmiermittelaufnahme 10 ein einziges Gehäuse 14 auf, welches ein Schmiermittelreservoir 20 sowie ein Schmiermittelabscheider 30 aufnimmt. Über die äußere Strichpunktlinie wird im Wesentlichen die Schmiermittelaufnahme 10 abgegrenzt, während die innere Strichpunktlinie Schmiermittelreservoir 20 sowie Schmiermittelabschneider 30 voneinander abgrenzt.

Das verdichtete von der Vakuumpumpe kommende Gas tritt über den Gaseinlass 22 in eine Hochdruckkammer 50 des Schmiermittelreservoirs ein. Aufgrund von Gravitation und/oder Reduzierung der Fördergeschwindigkeit wird Schmiermittel aus dem einströmenden Gasstrom separiert und fällt (über Strichlinie 51 dargestellt) in einen Schmiermitteltank 54. Anstelle der Ausführung der Hochdruckkammer 50 als Hochdruckkammer, ist es bei dieser und den weiteren, insbesondere dargestellten, Ausführungen bevorzugt auch möglich, dass es sich um eine (einfache) erste Kammer 50 handelt.

Insbesondere weist das dargestellte Schmiermittelreservoir 20 (und/oder die übrigen, insbesondere dargestellten, Ausführungsformen) eine Schmiermittelnachfüllvorrichtung 29, wie beispielsweise eine selektiv verschließbare Nachfüllöffnung auf. Über diese Nachfüllvorrichtung 29 kann beispielsweise ein Benutzer manuell Schmiermittel in das Schmiermittelreservoir 20 bzw. den Schmiermitteltank 54 nachfüllen.

Bevorzugt ist es, dass das Schmiermittelreservoir 20 einen Wärmetauscher 56 zur Temperierung des Schmiermittels aufweist. Dargestellt handelt es sich um einen Wärmetauscher 56 dessen Funktion lediglich über die Oberfläche und hierdurch abgegebene Wärme an die Umgebung ausgeführt ist.

Insbesondere ist mit dem Schmiermitteltank 54 ein Schmiermittelfilter 52 verbunden, über den das Schmiermittel gefiltert wird. Vorzugsweise ist der Filter 52 derart ausgeführt, dass dieser Partikel und/oder Wasser aus dem Schmiermittel filtert. Nach der Filterung tritt das Schmiermittel über einen Schmiermittelauslass 28 aus dem Schmiermittelreservoir 20 aus und wird über eine erste Schmiermittelverbindung 44 in Richtung der Vakuumpumpe 100 geleitet.

Der Gasstrom tritt über einen Gasauslass 24 aus dem Schmiermittelreservoir 20 aus und wird über eine erste Gasverbindung 40 weiter in Richtung Schmiermittelabscheider 30 geführt. Diese erste Gasverbindung 40 (sowie weitere entsprechende Gas- und/oder Schmiermittelverbindungen in dieser und weiteren Darstellungen) können beispielsweise als Schläuche und/oder Rohre ausgestaltet sein, jedoch ist auch eine direkte Verbindung, beispielsweise ein Durchströmen eines Raums und Passieren einer imaginären Grenze (siehe erste Gasverbindung 40 bspw. in Fig. 1a) hierbei möglich.

Der Gasstrom, der durch die erste Gasverbindung 40 geführt wird, tritt über einen Gaseinlass 32 in den Schmiermittelabscheider 30 ein. Hierbei passiert der Gasstrom zunächst ein Schmiermittelsepariersystem 60. Vorzugsweise erfolgt in dem Schmiermittelsepariersystem 60 eine Abscheidung von Schmiermittel über eine (weitere) Reduktion der Fördergeschwindigkeit und/oder über Gravitation. Der Gasstrom wird ausgehend von Schmiermittelsepariersystem 60, insbesondere über eine gasführende Verbindung 61 weiter zu einem Gasschmiermittelfilter 62 geführt.

Im Gasschmiermittelfilter 62 erfolgt eine Filterung des Gasstroms, insbesondere über einen Filter. Ausgehend vom Gasschmiermittelfilter tritt der Gasstrom aus einem Gasauslass 34 aus dem Schmiermittelabscheider 30 und kann, insbesondere über einen Auspuff 12, aus der Schmiermittelaufnahme 10 entweichen.

Bevorzugt tritt das über das Schmiermittelsepariersystem 60 und/oder den Gasschmiermittelfilter 62 separierte Schmiermittel, beispielsweise über schmiermittelführende Leitungen 63, 65, in eine Umgebungsdruckkammer 66. Hiervon ausgehend wird das Schmiermittel vorzugsweise zu einem Schmiermittelrückgewinnungssystem 64 geführt. Das Schmiermittelrückgewinnungssystem 64 weist insbesondere einen schmiermittelkühlenden Wärmetauscher und/oder einen Schmiermitteltank auf. Anstelle der Ausführung der Umgebungsdruckkammer 66 als Umgebungsdruckkammer, ist es bei dieser und den weiteren, insbesondere dargestellten, Ausführungen bevorzugt auch möglich, dass es sich um eine (einfache) zweite Kammer 66 handelt.

Dargestellt tritt das Schmiermittel aus dem Schmiermittelrückgewinnungssystem 64 über Schmiermittelauslässe 38', 38" aus dem Schmiermittelabscheider 30 aus. Hierbei wird das Schmiermittel einerseits über eine weitere Schmiermittelverbindung 46 durch einen Schmiermitteleinlass 26 in das Schmiermittelreservoir 20 geführt. Andererseits wird das Schmiermittel über eine zusätzliche Schmiermittelverbindung 48 in Richtung der Vakuumpumpe 100 geführt.

Die vom Schmiermittelabscheider 30 kommende zusätzliche Schmiermittelverbindung 48 sowie die vom Schmiermittelreservoir 20 kommende erste Schmiermittelverbindung 44 werden dargestellt zusammengeführt und über eine koppelbare Schmiermittelverbindung 45 in den Schmiermitteleinlass 104 der Vakuumpumpe 100 in ebendiese eingeführt.

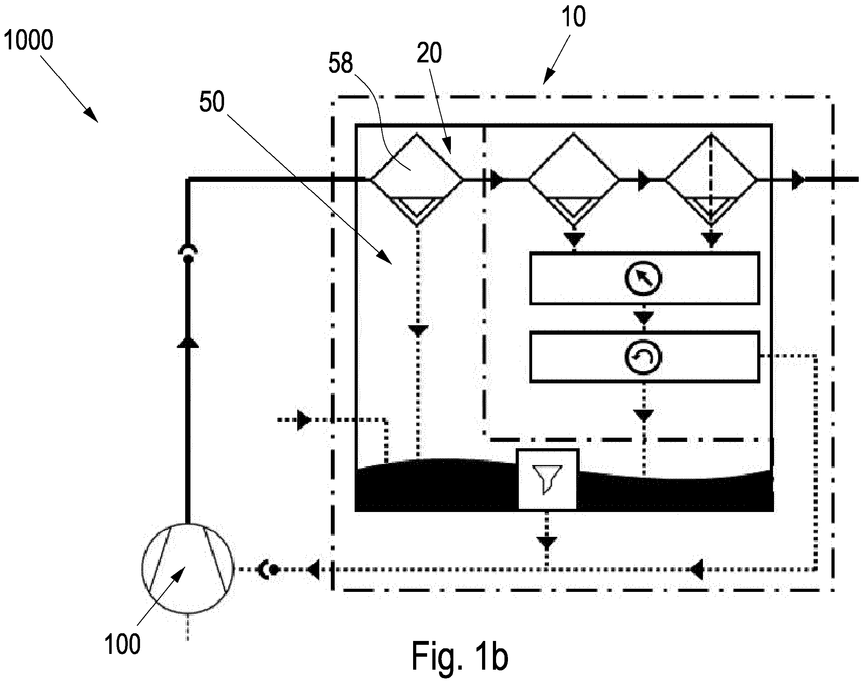

Figur 1b zeigt eine weitere Ausführungsform eines erfindungsgemäßen Vakuumpumpensystems 1000 mit einer weiteren Ausführungsform einer erfindungsgemäßen Schmiermittelaufnahme 10 mit einer Vakuumpumpe 100. Die hier dargestellten Ausführungsformen entsprechen im Wesentlichen der Ausführungsform aus Figur 1a.

Im Gegensatz zu der Ausführungsform aus Figur 1a weist das Schmiermittelreservoir 20 ein Schmiermittelsepariersystem 58 in der Hochdruckkammer 50 auf. In Kombination oder an Stelle der Separation über die Hochdruckkammer erfolgt somit eine Schmiermittelabscheidung mittels Schmiermittelsepariersystem, welches beispielsweise einen Schmiermittelseparator, insbesondere einen Gravitationsschmiermittelseparator und/oder einen Filter und/oder einen Impellerseparator aufweist.

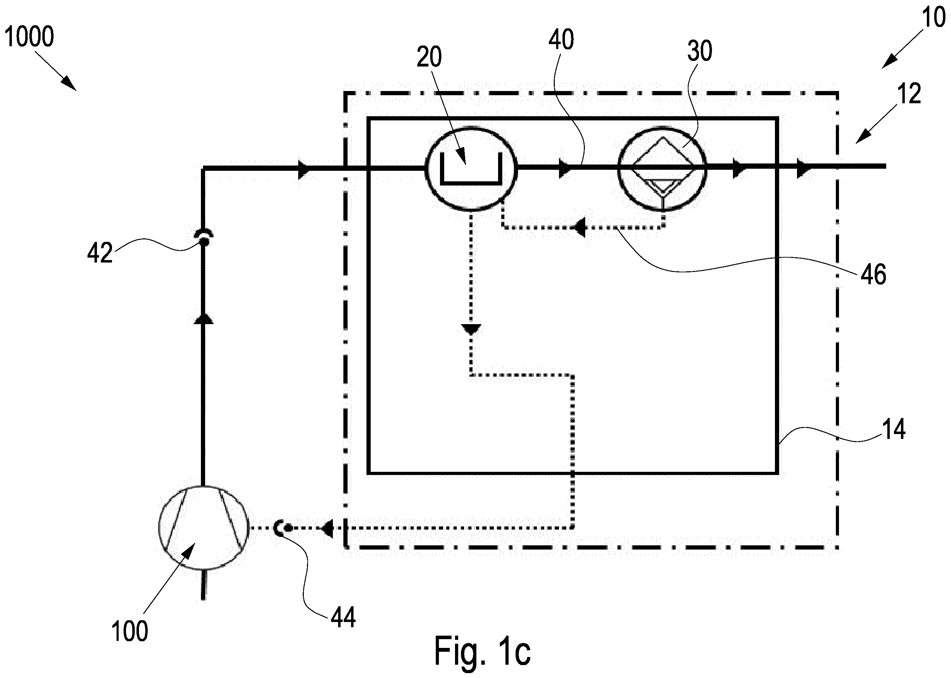

Figur 1c zeigt eine weitere Ausführungsform eines Vakuumpumpensystems 1000 mit einer weiteren Ausführungsform einer Schmiermittelaufnahme 10 sowie einer Vakuumpumpe 100.

Bei den Ausführungsformen aus Figur 1c handelt es sich erneut um Ausführungsformen, die im Wesentlichen denen aus Figur 1a entsprechen. Die Ausführungsformen aus Figur 1c sind jedoch wesentlich vereinfacht ausgeführt.

Das Gas der Vakuumpumpe strömt über die zweite Gasverbindung 42 in das Schmiermittelreservoir 20 und hiervon ausgehend über die erste Gasverbindung 40 in den Schmiermittelabscheider 30 ein. Das Gas verlässt die Schmiermittelaufnahme 10 durch den Auspuff 12.

Das lediglich schematisch dargestellte Schmiermittelreservoir 20 kann hierbei beispielsweise als einfache Kammer ausgestaltet sein, jedoch auch eine oder mehrere Elemente und/oder Funktionen anderer Schmiermittelreservoirs 20, vorzugsweise der anderen Ausführungsformen, aufweisen. Ebenso kann es sich bei dem lediglich schematisch dargestellten Schmiermittelabscheider 30 um einen einfachen Abscheider, wie beispielsweise einen Filter, handeln. Jedoch ist es auch möglich, dass der Schmiermittelabscheider 30 eine oder mehrere Eigenschaften und/oder Komponenten anderer Schmiermittelabscheider 30, vorzugsweise der anderen Ausführungsformen, aufweist.

Das im Schmiermittelabscheider 30 abgeschiedene Schmiermittel wird über eine weitere Schmiermittelverbindung 46 zum Schmiermittelreservoir geleitet. Das im Schmiermittelreservoir 20 gesammelte Schmiermittel wird über eine koppelbare erste Schmiermittelverbindung 44 zur Vakuumpumpe 100 geführt.

Die Schmiermittelaufnahme 10 weist hierbei lediglich ein Gehäuse 14 auf, welches Schmiermittelreservoir 20 sowie Schmiermittelabscheider 30 aufnimmt. Bevorzugt ist es hierbei, dass die Kopplung der zweiten Gasverbindung 42 und/oder der ersten Schmiermittelverbindung 44 über das Gehäuse 14, beispielsweise eine steckbare Gehäuseverbindung erfolgt.

Die Schmiermittelaufnahme 10 aus den Figuren 1a bis 1c stellt bspw. eine Ausführung gemäß der oben beschriebenen ersten Konfiguration dar.

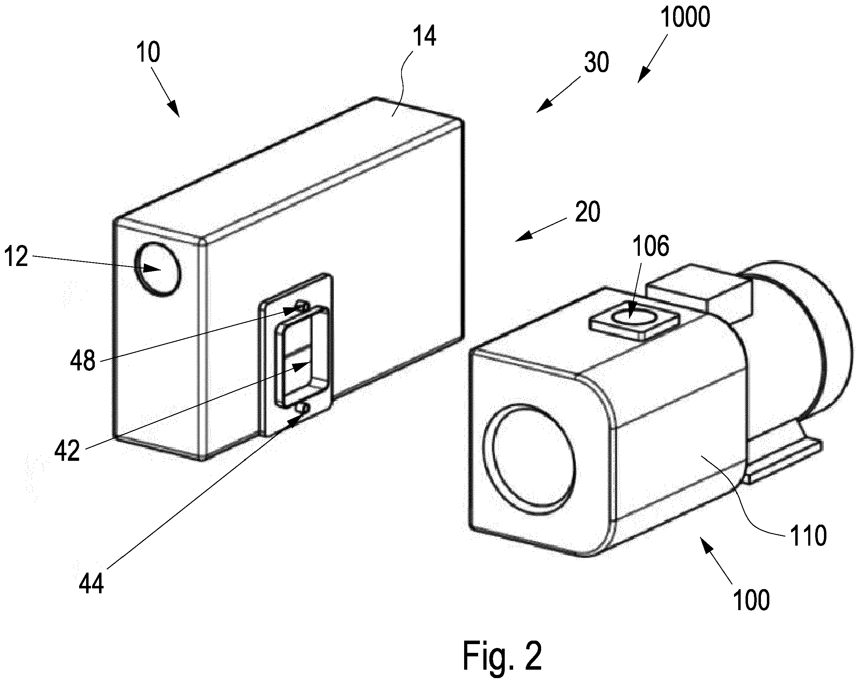

Figur 2 zeigt eine perspektivische Ansicht einer Ausführungsform eines erfindungsgemäßen Vakuumpumpensystems 1000 mit einer Ausführungsform einer erfindungsgemäßen Schmiermittelaufnahme 10 und einer Vakuumpumpe 100. Die Ausführungsformen entsprechen hierbei im Wesentlichen den Ausführungsformen aus den Figuren 1a bis 1c.

Die Vakuumpumpe 100 weist einen Gaseinlass 106 auf. Das verdichtete Gas wird über einen in der Darstellung nicht zu sehenden Gasauslass über eine zweite Gasverbindung 42 in die Schmiermittelaufnahme 10 eingeleitet. Das Gas passiert hierbei das Schmiermittelreservoir 20 sowie den Schmiermittelabscheider 30 und tritt aus einem Auspuff 12 aus der Schmiermittelaufnahme 10 aus. Über eine erste Schmiermittelverbindung 44 sowie eine zusätzliche Schmiermittelverbindung 48 wird das Schmiermittel der Schmiermittelaufnahme 10 in die Vakuumpumpe 100 geführt.

Bei den hier dargestellten Verbindungen 42, 44, 48 handelt es sich um koppelbare Steckverbindungen.

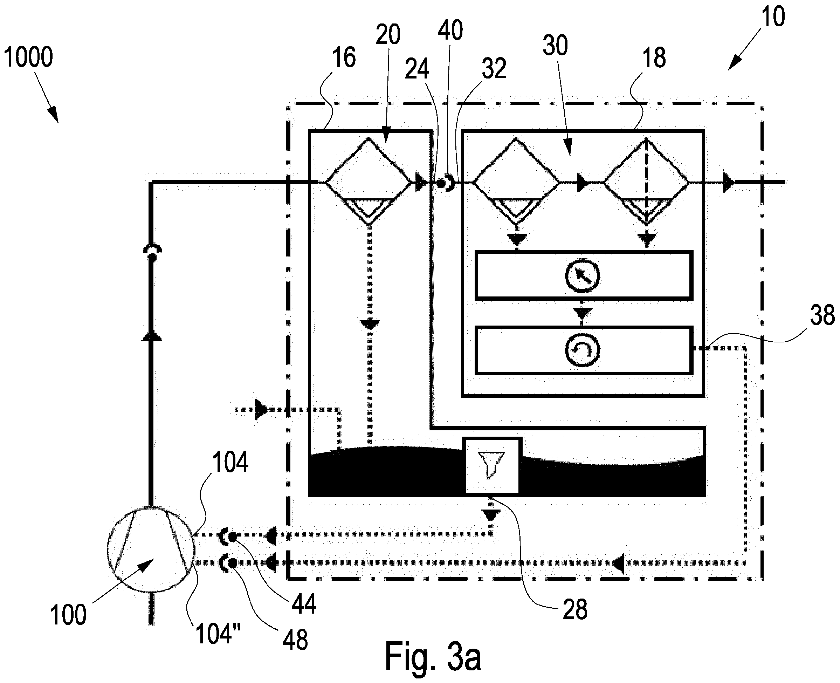

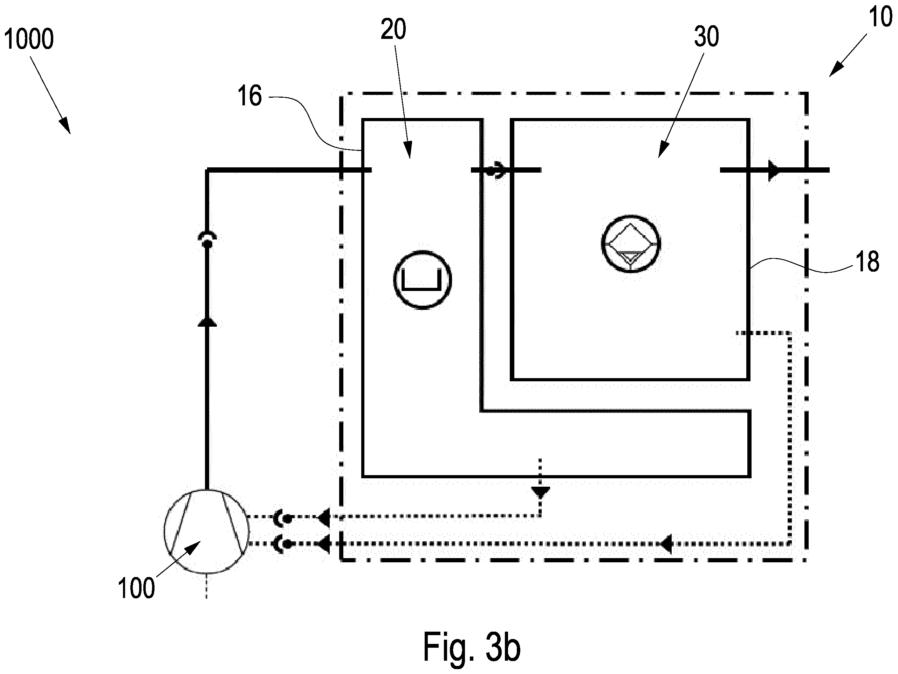

Figur 3a zeigt eine weitere Ausführungsform eines erfindungsgemäßen Vakuumpumpensystems 1000 mit einer weiteren Ausführungsform einer erfindungsgemäßen Schmiermittelaufnahme 10 und einer Vakuumpumpe 100. In großen Teilen entsprechen die Ausführungsformen aus Figur 3 den Ausführungsformen aus den Figuren 1a bis 1c. Im Unterschied zu den Ausführungsformen aus Figuren 1a bis 1c weist die Schmiermittelaufnahme 10 aus Figur 3 zwei Gehäuse 16, 18 auf. Das erste Gehäuse 16 nimmt hierbei das Schmiermittelreservoir 20 auf, während das zweite Gehäuse 18 den Schmiermittelabscheider 30 aufnimmt. Demnach ist die erste Gasverbindung zwischen Schmiermittelreservoir 20 und Schmiermittelabscheider 30 als koppelbare Verbindung ausgeführt. Weitergehend weist die Ausführungsform dargestellt zwei separate Schmiermittelverbindungen 44, 48 zur Vakuumpumpe auf. Die erste Schmiermittelverbindung 44 führt von dem Schmiermittelreservoir 20 zu einem ersten Schmiermitteleinlass 104' der Vakuumpumpe 100. Die zusätzliche Schmiermittelverbindung 48 wiederum führt von dem Schmiermittelabscheider 30 zu einem zweiten Schmiermitteleinlass 104" der Vakuumpumpe 100. Die beiden Schmiermittelverbindungen 44, 48 sind hierbei jeweils koppelbar ausgeführt.

Figur 3b zeigt weitere Ausführungsformen in Anlehnung an die Ausführungsform aus Figur 3a, wobei diese (erneut) stark vereinfacht ausgeführt sind (in Anlehnung an die Ausführung aus Figur 1c).

Das Gehäuse 16 weist hierbei ein stark vereinfachtes Schmiermittelreservoir 20 auf. Das Gehäuse 18 wiederum weist einen stark vereinfachten Schmiermittelabscheider 30 auf.

Die Schmiermittelaufnahme 10 aus den Figuren 3a und 3b stellt bspw. eine Ausführung gemäß der oben beschriebenen zweiten Konfiguration dar.

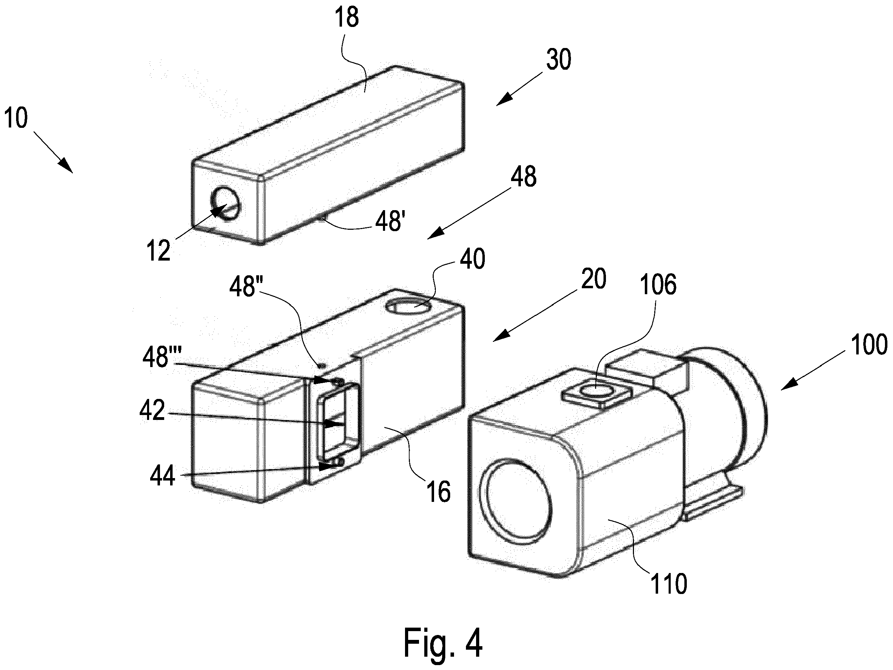

Figur 4 zeigt eine weitere Ausführungsform eines erfindungsgemäßen Vakuumpumpensystems 1000 mit einer weiteren Ausführungsform einer erfindungsgemäßen Schmiermittelaufnahme 10 und einer Vakuumpumpe 100. Die dargestellten Ausführungsformen sind hierbei angelehnt an die Ausführungsformen aus den Figuren 3a und 3b und basiert auf der Darstellung aus Figur 2.

Das Schmiermittelreservoir 20 ist hierbei in Gehäuse 16, separat von dem Schmiermittelabscheider 30 in Gehäuse 18 ausgeführt, die wiederum gemeinsam die Schmiermittelaufnahme 10 ausbilden. Die erste Gasverbindung 40 zwischen Schmiermittelreservoir 20 und Schmiermittelabscheider 30 ist als koppelbare Steckverbindung ausgeführt. Ebenfalls ist die zusätzliche Schmiermittelverbindung 48 als koppelbare Steckverbindung ausgeführt. Hierbei strömt das im Schmiermittelabscheider 30 abgeschiedene Schmiermittel über das Verbindungteil 48' aus ebendiesem aus, anschließend über das Verbindungteil 48" in das Schmiermittelreservoir 20 ein, wird in diesen jedoch vorzugsweise, beispielsweise über eine im Schmiermittelreservoir 20 innenliegende Leitung, direkt in die Vakuumpumpe 100 über ein Verbindungsteil 48‴ weitergeleitet. Die Vakuumpumpe 100 weist ein Vakuumpumpengehäuse 110 auf, wobei es sich um ein anderes Gehäuse als die Gehäuse 16, 18 von Schmiermittelreservoir 20 und Schmiermittelabscheider 30 handelt.

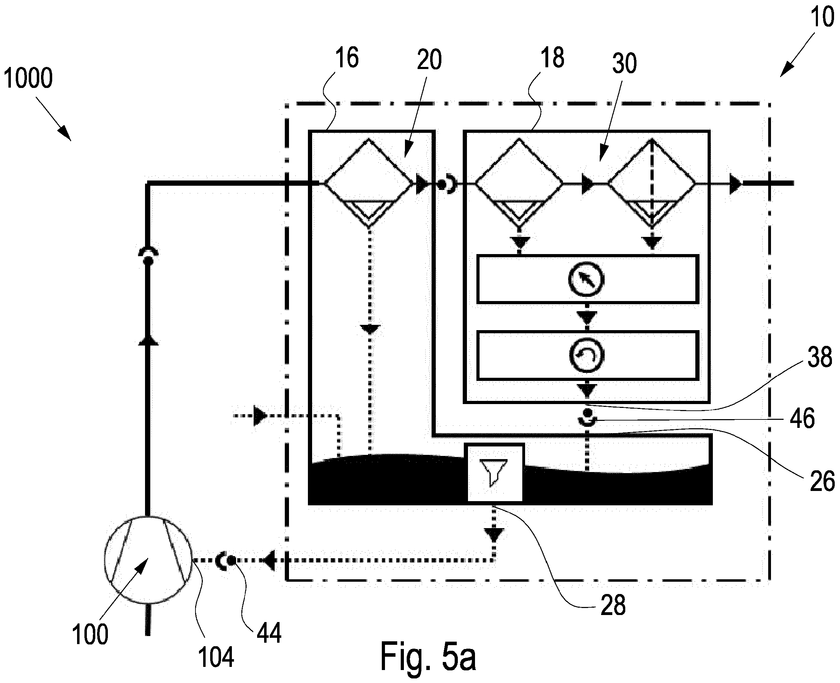

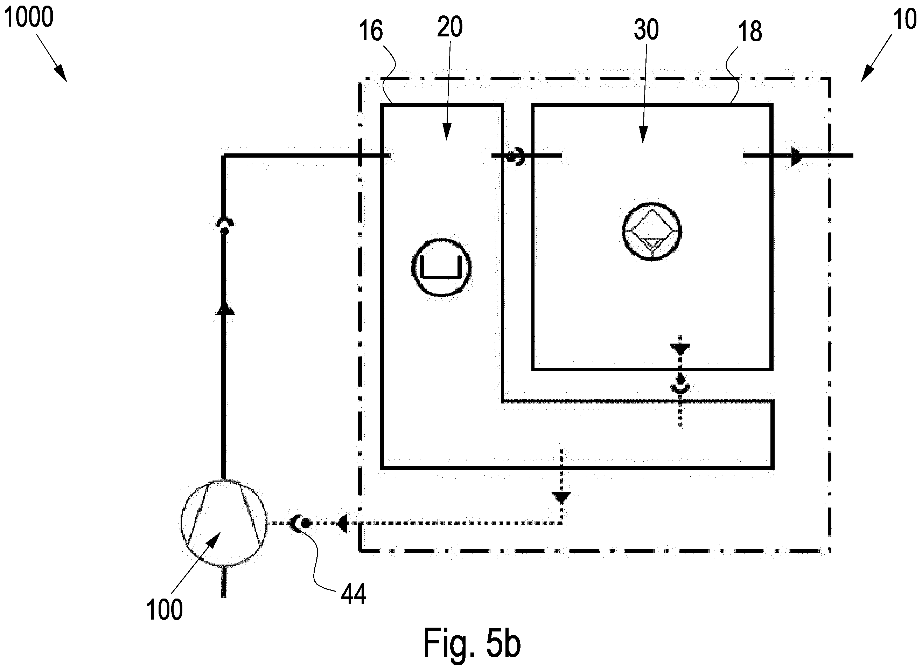

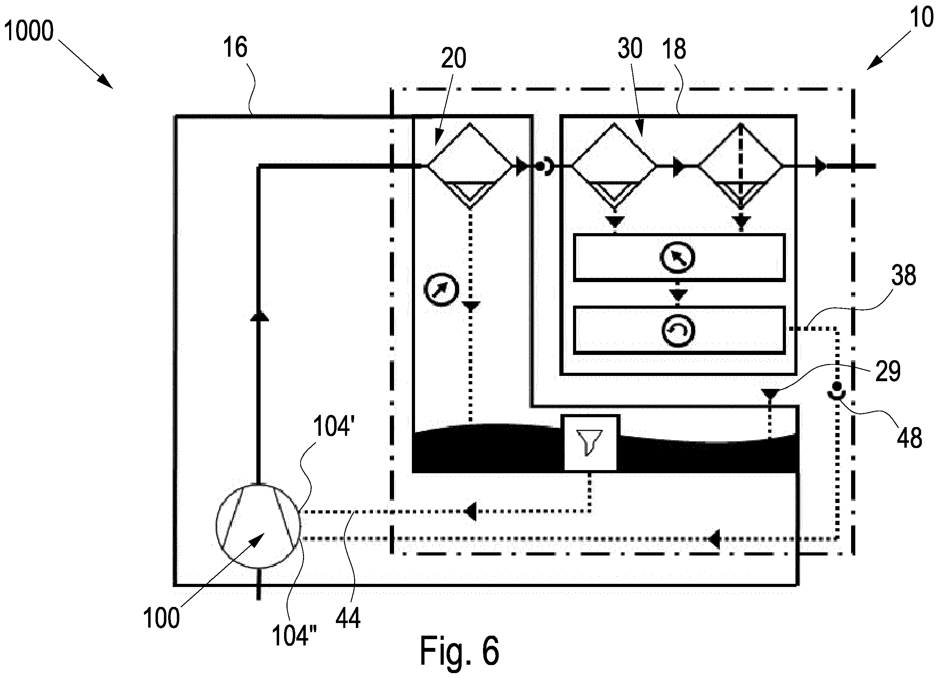

Die Figuren 5a, 5b und 6 zeigen weitere Ausführungsformen erfindungsgemäßer Vakuumpumpensysteme 1000 mit Ausführungsformen erfindungsgemäßer Schmiermittelaufnahmen 10 und Vakuumpumpen 100, die in Anlehnung an die vorstehenden Ausführungsformen ausgeführt sind, jedoch den dargestellten Variationen hiervon entsprechen.

Die Schmiermittelaufnahme 10 aus den Figuren 5a und 5b stellt bspw. eine Ausführung gemäß der oben beschriebenen vierten und die Schmiermittelaufnahme 10 aus der Figur 6 stellt bspw. eine Ausführung gemäß der oben beschriebenen dritten Konfiguration dar.

Sämtliche dargestellte Ausführungsformen sowie beschriebene Ausführungen können hierbei kombiniert werden.

## Patentansprüche

1. Schmiermittelaufnahme (10) für eine, vorzugsweise schmiermittelgedichtete, Vakuumpumpe (100), insbesondere für eine Drehschieberpumpe, mit
einem, einen Gaseinlass (22), einen Gasauslass (24), einen Schmiermittelauslass (28), sowie einen Schmiermitteleinlass (26) aufweisenden Schmiermittelreservoir (20);
einem, einen Gaseinlass (32), einen Gasauslass (34) und einen Schmiermittelauslass (38) aufweisenden Schmiermittelabscheider (30);
einem mit dem Gasauslass (34) des Schmiermittelabscheiders (30) gasführend verbundenem Auspuff (12);
einer ersten Gasverbindung (40) zwischen dem Gasauslass (24) des Schmiermittelreservoir (20) und dem Gaseinlass (32) des Schmiermittelabscheiders (30);
einer zweiten Gasverbindung (42) zur Verbindung des Gaseinlasses (22) des Schmiermittelreservoirs (20) mit der Vakuumpumpe (100);
einer ersten Schmiermittelverbindung (44) zur Verbindung des Schmiermittelauslass (28) des Schmiermittelreservoirs (20) mit der Vakuumpumpe (100); sowie
einer weitere Schmiermittelverbindung (46) zwischen dem Schmiermittelauslass (38) des Schmiermittelabscheiders (30) und dem Schmiermitteleinlass (26) des Schmiermittelreservoirs (20) und/oder einer zusätzlichen Schmiermittelverbindung (48) zur Verbindung des Schmiermittelauslasses (38) des Schmiermittelabscheiders (30) mit der Vakuumpumpe (100);
**dadurch gekennzeichnet, dass**
zumindest eine der Gasverbindungen (40; 42) und eine der Schmiermittelverbindungen (44; 46; 48) selektiv koppelbar ist.

2. Schmiermittelaufnahme nach Anspruch 1, **dadurch gekennzeichnet, dass**
- die erste Gasverbindung (40), die erste Schmiermittelverbindung (44) sowie vorzugsweise die zusätzliche Schmiermittelverbindung (48); oder
- die erste Gasverbindung (40), die zweite Gasverbindung (42), die erste Schmiermittelverbindung (44) sowie vorzugsweise die weitere Schmiermittelverbindung (46) und/oder die zusätzliche Schmiermittelverbindung (48); oder
- die zweite Gasverbindung (42), sowie vorzugsweise die weitere Schmiermittelverbindung (46) und/oder die zusätzliche Schmiermittelverbindung (48); oder
- die erste Gasverbindung (40), die zweite Gasverbindung (42), die erste Schmiermittelverbindung (44) sowie vorzugsweise die zusätzliche Schmiermittelverbindung (48);
selektiv koppelbar sind, wobei insbesondere die übrigen Gasverbindungen und/oder die übrigen Schmiermittelverbindungen fest verbunden sind.

3. Schmiermittelaufnahme (10) nach Anspruch 1 oder 2, **gekennzeichnet durch**
ein das Schmiermittelreservoir (20) und den Schmiermittelabscheider (30) aufnehmendes Gehäuse (14), oder
ein das Schmiermittelreservoir (20) aufnehmendes Gehäuse (16) und/oder ein den Schmiermittelabscheider (30) aufnehmendes Gehäuse (18).

4. Schmiermittelaufnahme (10) nach einem der Ansprüche 1 bis 3, **dadurch gekennzeichnet, dass**
die selektiv koppelbaren Gasverbindungen und/oder die selektiv koppelbaren Schmiermittelverbindungen einen, vorzugsweise einrastenden, Steckanschluss aufweisen.

5. Schmiermittelaufnahme (10) nach einem der Ansprüche 1 bis 4, **dadurch gekennzeichnet, dass** die selektiv koppelbaren Gasverbindungen und/oder Schmiermittelverbindungen, selbstschließend, vorzugsweise bei entkoppelter Verbindung zur Vakuumpumpe (100), ist.

6. Schmiermittelaufnahme (10) nach einem der Ansprüche 1 bis 5, **dadurch gekennzeichnet, dass** das Schmiermittelreservoir (20) aufweist:
eine vorzugsweise mit dem Schmiermitteleinlass (26) des Schmiermittelreservoirs (20) und/oder dem Gasauslass (24) des Schmiermittelreservoirs (20) verbundene erste Kammer (50), besonders bevorzugt eine Hochdruckkammer (50), und/oder
ein vorzugsweise mit dem Schmiermittelauslass (28) verbundenes Schmiermittelfiltersystem (52), und/oder
einen vorzugsweise mit der ersten Kammer (50) und/oder dem Schmiermittelfiltersystem (52) verbundenen, Schmiermitteltank (54), und/oder
einen, vorzugsweise zwischen Schmiermittelfiltersystem (50) und Schmiermittelauslass (28) angeordneten, insbesondere schmiermittelkühlenden, Wärmetauscher (56).

7. Schmiermittelaufnahme (10) nach Anspruch 6, **dadurch gekennzeichnet, dass** die erste Kammer (50) einen Schmiermittelseparator (58), vorzugsweise einen Gravitationsschmiermittelseparator, aufweist.

8. Schmiermittelaufnahme (10) nach einem der Ansprüche 1 bis 7, **dadurch gekennzeichnet, dass** der Schmiermittelabscheider (30) aufweist:
ein, vorzugsweise mit dem Gaseinlass (32) des Schmiermittelabscheiders (30) verbundenes, Schmiermittelsepariersystem (60), und/oder
ein, vorzugsweise mit dem Schmiermittelsepariersystem (60) und/oder dem Gasauslass (34) des Schmiermittelabscheiders (30) verbundener, Gasschmiermittelfilter, und/oder
ein, vorzugsweise mit dem Schmiermittelsepariersystem (60) und/oder dem Gasschmiermittelfilter (62) verbundenes, Schmiermittelrückgewinnungssystem (64), und/oder
eine, vorzugsweise zwischen Schmiermittelrückgewinnungssystem (64) sowie Schmiermittelsepariersystem (60) und/oder Gasschmiermittelfilter (62) angeordnete, zweite Kammer (66), besonders bevorzugt eine Umgebungsdruckkammer (66).

9. Schmiermittelaufnahme (10) nach Anspruch 8, **dadurch gekennzeichnet, dass** das Schmiermittelsepariersystem (60) mindestens einen Schmiermittelseparator aufweist, wobei es sich bei dem mindestens einen Schmiermittelseparator vorzugsweise um einen Gravitationsschmiermittelseparator oder einen Filter oder einen Impellerseparator handelt.

10. Schmiermittelaufnahme (10) nach Anspruch 8 oder 9, **dadurch gekennzeichnet, dass** das Schmiermittelrückgewinnungssystem (64) einen, insbesondere schmiermittelkühlenden, Wärmetauscher und/oder einen Schmiermitteltank aufweist.

11. Vakuumpumpensystem (1000), insbesondere Drehschieberpumpensystem, mit
einer Schmiermittelaufnahme (10) nach einem der Ansprüche 1 bis 10, und einer Vakuumpumpe (100),
wobei der Gasauslass (102) der Vakuumpumpe (100) über die zweite Gasverbindung (42) mit dem Gaseinlass (22) des Schmiermittelreservoirs (20), und der Schmiermitteleinlass (104) der Vakuumpumpe (100) über die erste Schmiermittelverbindung (44) mit dem Schmiermittelauslass (28) des Schmiermittelreservoirs (20), und
insbesondere der Schmiermitteleinlass (104) der Vakuumpumpe (100) über die zusätzliche Schmiermittelverbindung (48) mit dem Schmiermittelauslass (38) des Schmiermittelabscheiders (30) verbunden ist.

12. Vakuumpumpensystem (1000) nach Anspruch 11, **dadurch gekennzeichnet, dass** der Gasauslass (102) der Vakuumpumpe (100) und/oder der Schmiermitteleinlass (104) der Vakuumpumpe (100) selbstschließend, vorzugsweise bei entkoppelter Verbindung zu Schmiermittelaufnahme (10), ist.

## Claims

1. Lubricant receptacle (10) for a preferably lubricant-sealed vacuum pump (100), in particular a rotary vane pump, comprising
a lubricant reservoir (20) having a gas inlet (22), a gas outlet (24), a lubricant outlet (28), as well as a lubricant inlet (26);
a lubricant separator (30) having a gas inlet (32), a gas outlet (34) and a lubricant outlet (38);
an exhaust (12) connected in a gas-carrying manner with the gas outlet (34) of the lubricant separator (30);
a first gas connection (40) between the gas outlet (24) of the lubricant reservoir (20) and the gas inlet (32) of the lubricant separator (30);
a second gas connection (42) for connecting the gas inlet (22) of the lubricant reservoir (20) with the vacuum pump (100);
a first lubricant connection (44) for connectiing the lubricant outlet (28) of the lubricant reservoir (20) with the vacuum pump (100);
as well as
a further lubricant connection (46) between the lubricant outlet (38) of the lubricant separator (30) and the lubricant inlet (26) of the lubricant reservoir (20) and/or an additional lubricant connection (48) for the connection of the lubricant outlet (38) of the lubricant separator (30) with the vacuum pump (100);
**characterized in that**
at least one of the gas connections (40; 42) and one of the lubricant connections (44; 46; 48) is selectively coupleable.

2. Lubricant receptacle (10) of claim 1, **characterized in that**
- the first gas connection (40), the first lubricant connection (44), as well as preferably the additional lubricant connection (48); or
- the first gas connection (40), the second gas connection (42), the first lubricant connection (44), as well as preferably the further lubricant connection (46) and/or the additional lubricant connection (48); or
- the second gas connection (42), as well as preferably the further lubricant connection (46) and/or the additional lubricant connection (48); or
- the first gas connection (40), the second gas connection (42), the first lubricant connection (44), as well as preferably the additional lubricant connection (48)
are selectively coupleable, wherein in particular the other gas connections and/or the other lubricant connections are fixedly connected.

3. Lubricant receptacle (10) of claim 1 or 2, **characterized by**
a housing (14) accommodating the lubricant reservoir (20) and the lubricant separator (30), or
a housing (16) accommodating the lubricant reservoir (20) and/or a housing (18) accommodating the lubricant separator (30).

4. Lubricant receptacle (10) of one of claims 1 to 3, **characterized in that** the selectively coupleable gas connections and/or the selectively coupleable lubricant connections comprise a plug-in connection, preferably a snap-in plug-in connection.

5. Lubricant receptacle (10) of one of claims 1 to 4, **characterized in that** the selectively coupleable gas connections and/or lubricant connections are self-closing, preferably when the connection with the vacuum pump (100) is decoupled.

6. Lubricant receptacle (10) of one of claims 1 to 5, **characterized in that** the lubricant reservoir (20) comprises:
a first chamber (50), particularly preferred a high pressure chamber (50), which is preferably connected with the lubricant inlet (26) of the lubricant reservoir (20) and/or the gas outlet (24) of the lubricant reservoir (20), and/or
a lubricant filter system (52) preferably connected with the lubricant outlet (52), and/or
a lubricant tank (54) preferably connected with the first chamber (50) and/or the lubricant filter system (52), and/or
a heat exchanger (56), in particular a lubricant-cooling heat exchanger, preferably arranged between the lubricant filter system (52) and the lubricant outlet (28).

7. Lubricant receptacle (10) of claim 6, **characterized in that** the first chamber (50) comprises a lubricant separator (58), preferably a gravity lubricant separator.

8. Lubricant receptacle (10) of one of claims 1 to 7, **characterized in that** the lubricant separator (30) comprises:
a lubricant separating system (60) preferably connected with the gas inlet (32) of the lubricant separator (30), and/or
a gas lubricant filter preferably connected with the lubricant separating system (60) and/or the gas outlet (34) of the lubricant separator (30), and/or
a lubricant recovery system (64) preferably connected with the lubricant separating system (60) and/or the gas lubricant filter (62), and/or
an second chamber (66), preferably an ambient pressure chamber (66), which is preferably arranged between the lubricant recovery system (64), as well as the lubricant separating system (60) and/or the gas lubricant filter (52).

9. Lubricant receptacle (10) of claim 8, **characterized in that** the lubricant separating system (60) comprises at least one lubricant separator, wherein the at least one lubricant separator preferably is a gravity lubricant separator or a filter or an impeller separator.

10. Lubricant receptacle (10) of claim 8 or 9, **characterized in that** the lubricant recovery system (64) comprises a heat exchanger, in particular a lubricant-cooling heat exchanger, and/or a lubricant tank.

11. Vacuum pump system (1000), in particular a rotary vane pump system, comprising
a lubricant receptacle (10) according to one of claims 1 to 10, and
a vacuum pump (100),
wherein the gas outlet (102) of the vacuum pump (100) is connected with the gas inlet (22) of the lubricant reservoir (20) via the second gas connection (42), and
the lubricant inlet (104) of the vacuum pump (100) is connected with the lubricant outlet (28) of the lubricant reservoir (20) via the first lubricant connection (44), and
in particular the lubricant inlet (104) of the vacuum pump (100) is connected with the lubricant outlet (38) of the lubricant separator (30) via the additional lubricant connection (48).

12. Vacuum pump system (1000) of claim 11, **characterized in that** the gas outlet (102) of the vacuum pump (100) and/or the lubricant inlet (104) of the vacuum pump (100) are self-closing, preferably when the connection with the lubricant receptacle (10) is decoupled.

## Revendications

1. Récipient de lubrifiant (10) pour une pompe à vide (100), de préférence étanche au lubrifiant, en particulier pour une pompe rotative à palettes, comprenant
un réservoir de lubrifiant (20) comportant une entrée de gaz (22), une sortie de gaz (24), une sortie de lubrifiant (28), ainsi qu'une entrée de lubrifiant (26) ;
un séparateur de lubrifiant (30) comprenant une entrée de gaz (32), une sortie de gaz (34) et une sortie de lubrifiant (38) ;
un échappement (12) relié à la sortie de gaz (34) du séparateur de lubrifiant (30) et guidant le gaz ;
un premier raccord de gaz (40) entre la sortie de gaz (24) du réservoir de lubrifiant (20) et l'entrée de gaz (32) du séparateur de lubrifiant (30);
un second raccord de gaz (42) pour connecter l'entrée de gaz (22) du réservoir de lubrifiant (20) à la pompe à vide (100) ;
un premier raccord de lubrifiant (44) pour connecter la sortie de lubrifiant (28) du réservoir de lubrifiant (20) à la pompe à vide (100) ; et
un autre raccord de lubrifiant (46) entre la sortie de lubrifiant (38) du séparateur de lubrifiant (30) et l'entrée de lubrifiant (26) du réservoir de lubrifiant (20) et/ou un raccord de lubrifiant supplémentaire (48) pour connecter la sortie de lubrifiant (38) du séparateur de lubrifiant (30) à la pompe à vide (100) ;
**caractérisé en ce que**
au moins l'un des raccords de gaz (40 ; 42) et l'un des raccords de lubrifiant (44 ; 46 ; 48) peuvent être couplés sélectivement.

2. Récipient de lubrifiant selon la revendication 1, **caractérisé en ce que**
- le premier raccord de gaz (40), le premier raccord de lubrifiant (44) et de préférence le raccord de lubrifiant supplémentaire (48) ; ou
- le premier raccord de gaz (40), le second raccord de gaz (42), le premier raccord de lubrifiant (44) et de préférence l'autre raccord de lubrifiant (46) et/ou le raccord de lubrifiant supplémentaire (48) ; ou
- le second raccord de gaz (42), et de préférence l'autre raccord de lubrifiant (46) et/ou le raccord de lubrifiant supplémentaire (48) ; ou
- le premier raccord de gaz (40), le second raccord de gaz (42), le premier raccord de lubrifiant (44) et de préférence le raccord de lubrifiant supplémentaire (48) ;
peuvent être couplés sélectivement, en particulier les raccords de gaz restants et/ou les raccords de lubrifiant restants étant connectés de manière fixe.

3. Récipient de lubrifiant (10) selon la revendication 1 ou 2, **caractérisé par**
un boîtier (14) recevant le réservoir de lubrifiant (20) et le séparateur de lubrifiant (30), ou
un boîtier (16) recevant le réservoir de lubrifiant (20) et/ou un boîtier (18) recevant le séparateur de lubrifiant (30).

4. Récipient de lubrifiant (10) selon l'une quelconque des revendications 1 à 3, **caractérisé en ce que**
les raccords de gaz pouvant être couplés sélectivement et/ou les raccords de lubrifiant pouvant être couplés sélectivement comprennent une connexion enfichable, de préférence encliquetable.

5. Récipient de lubrifiant (10) selon l'une quelconque des revendications 1 à 4, **caractérisé en ce que** les raccords de gaz et/ou les raccords de lubrifiant pouvant être couplés sélectivement sont à fermeture automatique, de préférence lorsque le raccordement est découplé de la pompe à vide (100).

6. Récipient de lubrifiant (10) selon l'une quelconque des revendications 1 à 5, **caractérisé en ce que** le réservoir de lubrifiant (20) comprend :
une première chambre (50), de manière particulièrement préférée une chambre haute pression (50), de préférence connectée à l'entrée de lubrifiant (26) du réservoir de lubrifiant (20) et/ou à la sortie de gaz (24) du réservoir de lubrifiant (20), et/ou
un système de filtration de lubrifiant (52) connecté de préférence à la sortie de lubrifiant (28), et/ou
une cuve de lubrifiant (54) connectée de préférence à la première chambre (50) et/ou au système de filtration de lubrifiant (52), et/ou
un échangeur de chaleur (56), en particulier refroidissant le lubrifiant, agencé de préférence entre le système de filtration de lubrifiant (50) et la sortie de lubrifiant (28).

7. Récipient de lubrifiant (10) selon la revendication 6, **caractérisé en ce que** la première chambre (50) comprend un séparateur de lubrifiant (58), de préférence un séparateur de lubrifiant par gravité.

8. Récipient de lubrifiant (10) selon l'une quelconque des revendications 1 à 7, **caractérisé en ce que** le séparateur de lubrifiant (30) comprend :
un système de séparation de lubrifiant (60), de préférence connecté à l'entrée de gaz (32) du séparateur de lubrifiant (30), et/ou
un filtre de lubrifiant de gaz, de préférence connecté au système de séparation de lubrifiant (60) et/ou à la sortie de gaz (34) du séparateur de lubrifiant (30), et/ou
un système de récupération de lubrifiant (64), de préférence connecté au système de séparation de lubrifiant (60) et/ou au filtre de lubrifiant de gaz (62), et/ou
une seconde chambre (66), de manière particulièrement préférée une chambre à pression ambiante (66), agencée de préférence entre le système de récupération de lubrifiant (64) et le système de séparation de lubrifiant (60) et/ou le filtre de lubrifiant de gaz (62).

9. Récipient de lubrifiant (10) selon la revendication 8, **caractérisé en ce que** le système de séparation de lubrifiant (60) comprend au moins un séparateur de lubrifiant, ledit au moins un séparateur de lubrifiant étant de préférence un séparateur de lubrifiant par gravité ou un filtre ou un séparateur à turbine.

10. Récipient de lubrifiant (10) selon la revendication 8 ou 9, **caractérisé en ce que** le système de récupération de lubrifiant (64) comprend un échangeur de chaleur, en particulier refroidissant le lubrifiant, et/ou une cuve de lubrifiant.

11. Système de pompe à vide (1000), en particulier système de pompe rotative à palettes, comprenant un récipient de lubrifiant (10) selon l'une quelconque des revendications 1 à 10, et une pompe à vide (100),
la sortie de gaz (102) de la pompe à vide (100) étant connectée à l'entrée de gaz (22) du réservoir de lubrifiant (20) par l'intermédiaire du second raccord de gaz (42), et l'entrée de lubrifiant (104) de la pompe à vide (100) étant connectée à la sortie de lubrifiant (28) du réservoir de lubrifiant (20) par l'intermédiaire du premier raccord de lubrifiant (44), et
en particulier, l'entrée de lubrifiant (104) de la pompe à vide (100) étant connectée à la sortie de lubrifiant (38) du séparateur de lubrifiant (30) par l'intermédiaire du raccord de lubrifiant supplémentaire (48).

12. Système de pompe à vide (1000) selon la revendication 11, **caractérisé en ce que** la sortie de gaz (102) de la pompe à vide (100) et/ou l'entrée de lubrifiant (104) de la pompe à vide (100) est à fermeture automatique, de préférence en cas de connexion découplée d'avec le récipient de lubrifiant (10).
